# EUROPEAN PATENT APPLICATION

(11) **EP 2 724 849 A1**
(43) Date of publication of application: **30.04.2014**
(21) Application number: 13189990.8
(22) Date of filing: 24.10.2013
(51) Int. Cl.: B29D 30/06, B29C 33/38

(54) **Tire mold**

(30) Priority: 26.10.2012 US 201213661189
(71) Applicant: The Goodyear Tire & Rubber Company, Akron, Ohio 44316 (US)
(72) Inventor: Rex, William Allen, Doylestown, OH Ohio 44230 (US); Bachochin, Todd Andrew, North Jackson, OH Ohio 44451 (US); Wells, Dale Eugene, Massillon, OH Ohio 44646 (US); Haydu, JR, William Andrew, Akron, OH Ohio 44313 (US); Enix, Daniel Dale, Ravenna, OH Ohio 44266 (US)
(74) Representative: Kutsch, Bernd

(57) **Abstract**

A tire mold (10) comprising an upper mold portion (11) and a lower mold portion (12) is disclosed. The upper mold portion (11) and the lower mold portion (12) are movable relative to one another for insertion of a tire into the mold (10). The upper mold portion (11) includes an upper sidewall ring (18a, 18b) and the lower mold portion (12) includes a lower sidewall ring (34a, 34b). The mold (10) further includes a plurality of tread segments (32) which are joinable together to form an annular ring to encircle a tread of a green tire. The upper sidewall ring (18a, 18b) and the lower sidewall ring (34a, 34b) each include at least one internal cavity (100, 102, 130, 130', 130") filled with a material.

## Description

### Technical Field

This invention relates in general to tire molds, and more particularly to tire molds for large heavy duty tires.

### Background of the invention

The manufacturing of pneumatic tires for motor vehicles of nearly all sizes entails the steps of creating the carcass and attaching thereto the tread and sidewalls, which are made of uncured rubber. The combination of carcass, tread and sidewalls, prior to curing of the rubber, is called a "green tire." The final step in the manufacture of a tire is the insertion of the green tire into a tire mold, wherein the tire is heated to a sufficiently high temperature to vulcanize the tire. The tire is then removed from the mold and the manufacturing process is complete.

Whereas the manufacturing of tires for automobiles is a straightforward process involving relatively light-weight green tires, the manufacture of large tires for industrial or large off-road type vehicles of the sort used in earth moving and construction work entails the handling of very large green tires weighing hundreds of pounds. Because the tread of these large tires are very thick and massive, it requires a lot of heat transfer to the tread area of the tire in order to properly cure the tread. The sidewalls of the tire are much thinner and thus require less heat as compared to the thick tread. One problem that may arise is that the sidewall of the tire is cured the desired amount, while the tread is undercured. Alternatively, the tread may be cured the desired amount, while the sidewall and belt edges may be overcured. Thus, it is desired to have an improved tire mold which allows for the correct temperature of the tread and sidewall zone of a tire mold.

### Summary of the invention

The invention relates to a tire mold in accordance with claim 1.

Dependent claims refer to preferred embodiments of the invention.

In one aspect of the invention, a tire mold comprises an upper mold portion and a lower mold portion, wherein the upper mold portion and the lower mold portion are movable relative to one another for insertion of a tire into the mold, wherein the upper mold portion includes an upper sidewall ring and the lower mold portion includes a lower sidewall ring, wherein the mold further includes a plurality of tread segments which are joinable together to form an annular ring to encircle a tread of a green tire, and wherein the upper sidewall ring and the lower sidewall ring each include at least one internal cavity filled with a material.

In one aspect of the invention, one, some or preferably all of the plurality of tread segments may also comprise an internal cavity filled with a material.

In one aspect of the invention, the material filling the internal cavity in the upper sidewall ring may be different from the material filling the internal cavity in the lower sidewall ring; and/or the material filling the internal cavity in one or more of the tread segments may be different from the material filling the internal cavity in upper sidewall ring and/or different from the material filling the internal cavity in the lower sidewall ring. This allows it to adapt the speed of the curing of the tire at these locations in the mold to respective requirements.

In one aspect of the invention, the material filling the internal cavity in the upper sidewall ring may be the same as the material filling the internal cavity in the lower sidewall ring (34a, 34b); or the material filling the internal cavity in one or more of the tread segments (32) may the same as the material filling the internal cavity in upper sidewall ring and the material filling the internal cavity in the lower sidewall ring.

In one preferred aspect of the invention, the material filling the internal cavity in one or more of the tread segments, the material filling the internal cavity in upper sidewall ring and the material filling the internal cavity in the lower sidewall ring is a thermally insulating material.

In one aspect of the invention, said material has a thermal conductivity lower, preferably at least 10 times lower or at least 100 times lower, than the material of the upper sidewall ring and the material of the lower sidewall ring respectively. Preferably, this material has a thermal conductivity in a range of from 500 to 2000 times lower than the material of the upper sidewall ring and the material of the lower sidewall ring respectively.

In one preferred aspect of the invention, the material filling the optionally provided one or more tread segment cavities has a thermal conductivity lower, preferably at least 10 times lower or at least 100 times lower, than the material of the respective tread segment. Preferably, this material has a thermal conductivity in a range of from 500 to 2000 times lower than the material of the respective tread segment.

In one aspect of the invention, the lower mold portion may comprise the plurality of tread segments.

In one aspect of the invention, the tread segments have axially outer ends and one or more internal cavities in at least one tread segment filled with the material may be located at each axially outer end.

In one aspect of the invention, the internal cavity of the upper and lower sidewall ring may be positioned adjacent an inner surface of the respective sidewall ring.

In one aspect of the invention, the upper sidewall ring and/or the lower sidewall ring may be divided into at least two components.

In one aspect of the invention, the internal cavity of the upper and the lower sidewall ring may extend substantially along the inner surface of the sidewall ring.

In one aspect of the invention, the material filling the internal cavity in the one or more tread segments may be fiberglass or a fiberglass reinforced mineral filled sheet.

In one aspect of the invention, the material filling the internal cavity in one or both of the upper sidewall ring and the lower sidewall ring may be fiberglass or a fiberglass reinforced, mineral filled sheet.

### Brief descriptions of the figures

The structure, operation, and advantages of the present preferred embodiment of the invention will become further apparent upon consideration of the following description taken in conjunction with the accompanying Figures, wherein:
Figure 1 is a cross-sectional side view of a tire mold of the present invention shown in the closed position;
Figure 2 is a cross-sectional side view of the tire mold of Figure 1 shown with a tire therein; and
Figure 3 is a cross-sectional side view of another embodiment of a tire mold shown without a tire therein.

### Definitions

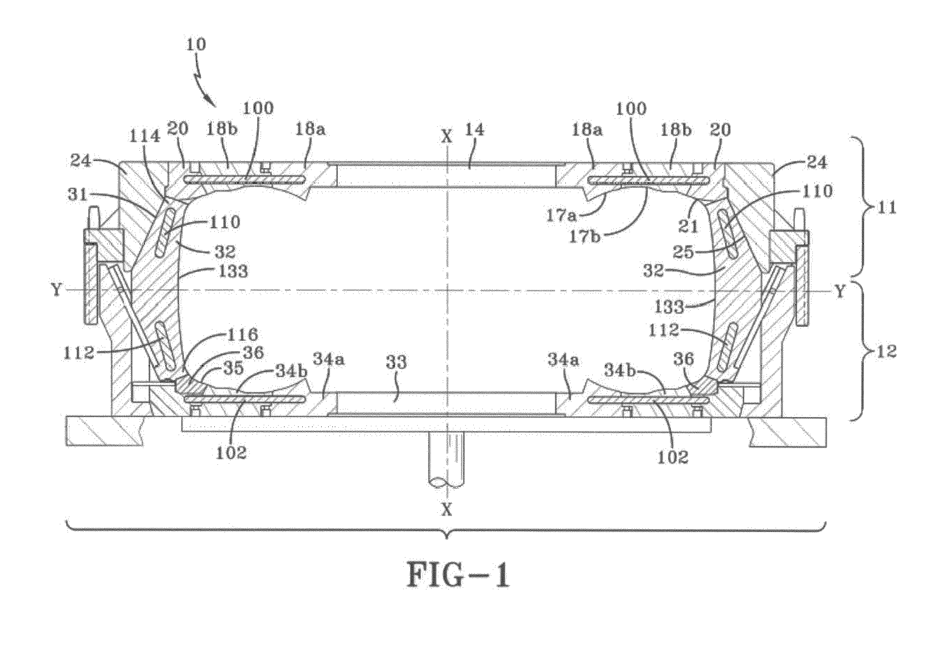

"Axial" refers to the direction X-X shown in Figure 1.

"Radial" refers to the direction Y-Y shown in Figure 1.

### Detailed description of the invention

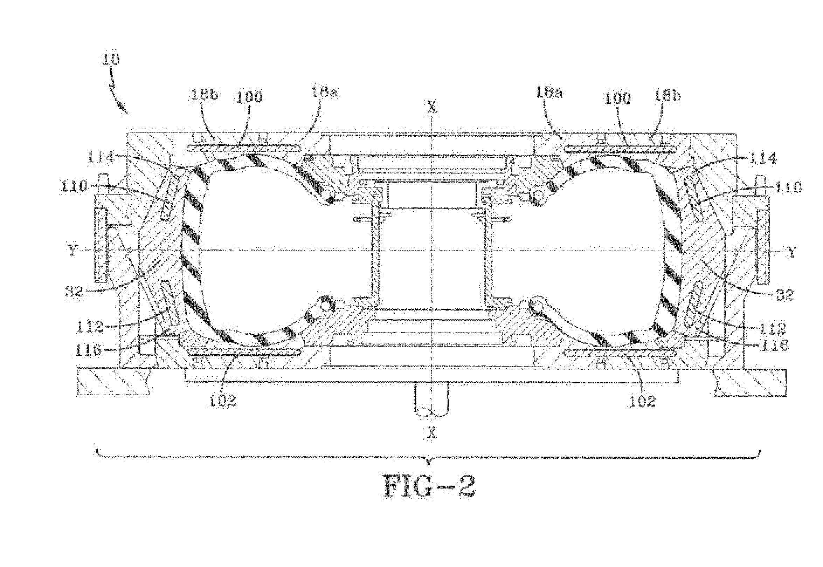

Figure 1 illustrates a cross-sectional side view of an improved tire mold 10 of the present invention shown in the closed position, while Figure 2 illustrates a tire mounted in a mold. The mold as shown has an upper portion 11 which includes a sidewall annular ring having a central opening 14. The sidewall annular ring may be further divided into two or more sidewall components 18a, 18b as shown, for ease of manufacturing. The sidewall components 18a, 18b each include an inner surface 17a, 17b for molding the sidewall of a tire. The sidewall annular ring or sidewall components 18a, 18b further include an interior cavity 100 that preferably extends along the entire width of the sidewall annular ring or sidewall components 18a, 18b. The cavity 100 is filled with an insulating material such as fiberglass, or a fiberglass reinforced, mineral filled sheet with heat resistant polyester thermosetting resin. One commercially available insulation material suitable for use is sold under the tradenames GLASSTHERM HT, GLASTHERM CH or GLASTHERM S, and is made by Jaco Products of Middlefield, Ohio. The R value of the insulation may be adjusted to provide the desired temperature profile of the tread segments and the sidewall components in order to ensure that the sidewall and belt edges are not over cured.

The upper mold portion 11 further includes an optional annular shoulder ring 20. The optional shoulder ring 20 is located between the sidewall components 18a, 18b and an annular actuating ring 24. The shoulder ring has an inner molding surface 21 for molding the shoulder/tread area of the tire. The annular actuating ring 24 comprises an inner frustroconical surface 25 aligned for engagement with an outer frustroconical surface 31 of the tread segments, and functions to align the tread segments during closing of the mold.

Referring again to Figure 1, a lower portion 12 of the mold 10 includes a lower sidewall ring having a central opening 33. The lower sidewall ring may be further subdivided into two or more components 34a, 34b. The lower sidewall annular ring or sidewall components 34a, 34b further include an interior cavity 102 that preferably extends along the entire width of the sidewall annular ring or sidewall components 34a, 34b. The cavity 100 is filled with an insulating material such as fiberglass, or a fiberglass reinforced, mineral filled sheet with heat resistant polyester thermosetting resin. One commercially available insulation suitable for use is sold under the tradenames GLASSTHERM HT, GLASTHERM CH or GLASTHERM S, and is made by Jaco Products of Middlefield, Ohio.

An optional shoulder ring 36 is positioned radially outward of the sidewall ring. The optional shoulder ring has a tread forming surface 35 for forming the shoulder section of the tire.

The lower portion of the mold further comprises a plurality of tread segments 32, which are arranged circumferentially about the green tire to be molded. Each tread segment 32 has a tread molding surface 133 having for example, lands and grooves for molding the tread of a green tire. The tread segments join together to form an annular ring to encircle and mold a tread of a green tire. Preferably, each tread segment is formed of a one piece unit and is not split into two or more pieces. Thus each tread segment has a tread molding surface 33 which extends substantially unbroken across the outer tread surface of the green tire, from one shoulder to the opposite shoulder. Each tread segment 32 preferably further includes a cavity 110, 112 that is located at the axially outer ends 114, 116 of the segment 32. The cavities 110, 112 are preferably positioned near the tread surface 133 to be adjacent the belt edges of the tire.

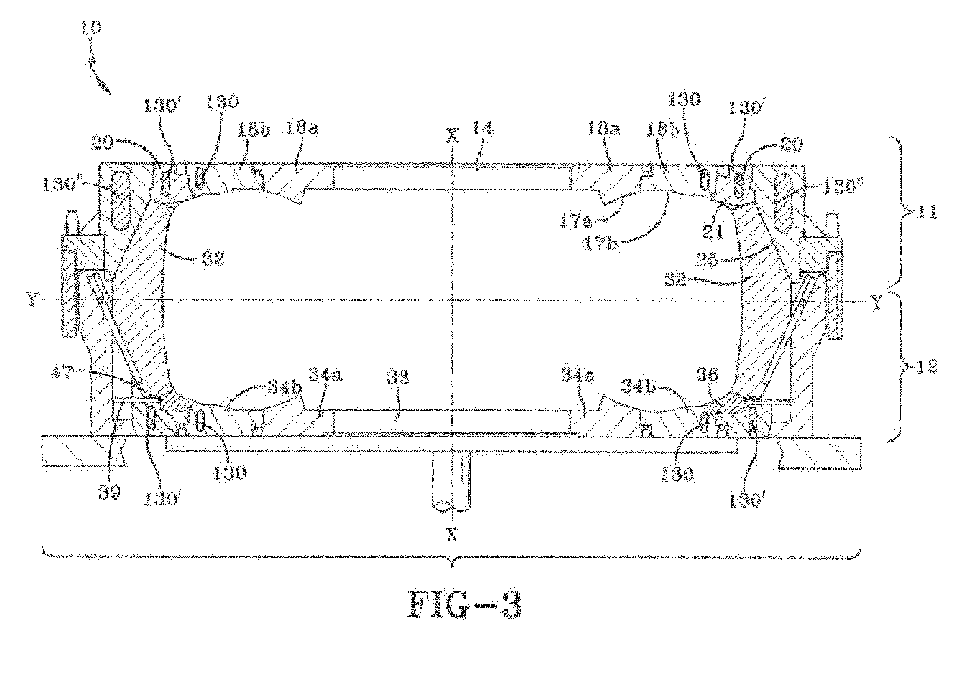

Figure 3 shows an alternative embodiment of a mold 10 with a different arrangement and design of internal cavities 130, 130' and 130" filled a thermally insulating material. In this case, the tread segments 32 do not have internal cavities although these may be provided s shown in Fig. 2 for instance.

Although the invention has been shown for use with a segmented type of mold, the invention is not limited to a segmented mold and may be utilized in other types of molds.

## Claims

1. A tire mold comprising an upper mold portion (11) and a lower mold portion (12), wherein the upper mold portion (11) and the lower mold portion (12) are movable relative to one another for insertion of a tire into the mold (10), wherein the upper mold portion (11) includes an upper sidewall ring (18a, 18b) and the lower mold portion (12) includes a lower sidewall ring (34a, 34b), and wherein the mold (10) further includes a plurality of tread segments (32) which are joinable together to form an annular ring to encircle a tread of a green tire, **characterized in that** the upper sidewall ring (18a, 18b) and the lower sidewall ring (34a, 34b) each include at least one internal cavity (100, 102, 130, 130', 130") filled with a material.

2. The tire mold of claim 1, wherein at least one or all of the plurality of tread segments (32) comprise an internal cavity (110, 112) filled with a material.

3. The tire mold of claim 1 or 2, wherein
(i) the material filling the internal cavity in the upper sidewall ring (18a, 18b) is different from the material filling the internal cavity in the lower sidewall ring (34a, 34b); and/or
(ii) the material filling the internal cavity in one or more of the tread segments (32) is different from the material filling the internal cavity in upper sidewall ring and/or different from the material filling the internal cavity in the lower sidewall ring.

4. The tire mold of claim 1 or 2, wherein
(i) the material filling the internal cavity in the upper sidewall ring (18a, 18b) is the same as the material filling the internal cavity in the lower sidewall ring (34a, 34b); or
(ii) the material filling the internal cavity in one or more of the tread segments (32) is the same as the material filling the internal cavity in upper sidewall ring and the material filling the internal cavity in the lower sidewall ring.

5. The tire mold of at least one of the previous claims, wherein the material filling the internal cavity in one or more of the tread segments (32), the material filling the internal cavity in upper sidewall ring and the material filling the internal cavity in the lower sidewall ring is a thermally insulating material.

6. The tire mold of claim 1 wherein the material has a thermal conductivity lower, preferably at least 10 times lower or at least 100 times lower, than the material of the upper sidewall ring (18a, 18b) and the material of the lower sidewall ring (34a, 34b) respectively.

7. The tire mold of claim 6 wherein the material has a thermal conductivity in a range of from 500 to 2000 times lower than the material of the upper sidewall ring and the material of the lower sidewall ring respectively.

8. The tire mold of claim 2 wherein the material has a thermal conductivity lower, preferably at least 10 times lower or at least 100 times lower, than the material of the respective tread segment (32).

9. The tire mold of claim 8 wherein the material has a thermal conductivity in a range of from 500 to 2000 times lower than the material of the respective tread segment (32).

10. The tire mold in accordance with at least one of the previous claims, wherein the lower mold portion (12) comprises the plurality of tread segments (32).

11. The tire mold in accordance with at least one of the previous claims, wherein the tread segments (32) have axially outer ends, and wherein the internal cavity (110, 112) in the at least one tread segment (32) filled with said material is located at each axially outer end.

12. The tire mold in accordance with at least one of the previous claims, wherein the internal cavity (100, 102, 130, 130', 130") of the upper and lower sidewall ring is positioned adjacent an inner surface (21) of the respective sidewall ring.

13. The tire mold in accordance with at least one of the previous claims, wherein the upper sidewall ring (18a, 18b) and/or the lower sidewall ring (34a, 34b) is divided into at least two components.

14. The tire mold in accordance with at least one of the previous claims, wherein the internal cavity of the upper and the lower sidewall ring extends substantially along the inner surface (21) of the sidewall ring.

15. The tire mold in accordance with at least one of the previous claims, wherein the material filling the internal cavity (110, 116) in that the one or more tread segments (32) is fiberglass or a fiberglass reinforced mineral filled sheet; and/or wherein the material filling the internal cavity (100, 102, 130, 130', 130") in one or both of the upper sidewall ring (18a, 18b) and the lower sidewall ring (34a, 34b) is fiberglass or a fiberglass reinforced, mineral filled sheet.
